# EUROPÄISCHE PATENTSCHRIFT

(11) **EP 3 167 634 B1**
(45) Veröffentlichungstag und Bekanntmachung des Hinweises auf die Patenterteilung: **11.04.2018**
(21) Anmeldenummer: 15704715.0
(22) Anmeldetag: 06.02.2015
(51) Int. Cl.: H04W 4/02, H04W 4/04, H04M 1/60

(54) **VERFAHREN ZUM SICHERN EINES INNENRAUMS EINES KRAFTFAHRZEUGS**
METHOD FOR SECURING AN INTERIOR OF A MOTOR VEHICLE
PROCÉDÉ DE SÉCURISATION D'UN ESPACE INTERNE D'UN VÉHICULE AUTOMOBILE

(30) Priorität: 11.07.2014 DE 102014010345
(43) Veröffentlichungstag der Anmeldung: 17.05.2017
(73) Patentinhaber: Audi AG, 85045 Ingolstadt (DE)
(72) Erfinder: BRÄUTIGAM, Heribert, 85055 Ingolstadt (DE); DONNER, Eckart, 85051 Ingolstadt (DE)
(74) Vertreter: Brandt, Kai
(86) Internationale Anmeldenummer: PCT/EP2015/000245
(87) Internationale Veröffentlichungsnummer: WO 2016/005013

(56) Entgegenhaltungen:
- WO-A1-2013/043228
- DE-A1-102011 112 370
- DE-A1-102012 014 074
- US-A1- 2011 105 097

## Beschreibung

Die Erfindung betrifft ein Verfahren zum Sichern eines Innenraums eines Kraftfahrzeugs, bei dem eine Sensoreinrichtung eine Position eines mobilen Endgeräts innerhalb des Kraftfahrzeugs erfasst. In Abhängigkeit von der Position kann das mobile Endgerät angesteuert werden. Die Erfindung betrifft ebenfalls eine entsprechende Steuereinrichtung und einen entsprechend ausgestatteten Kraftwagen.

Ein Benutzer eines Kraftfahrzeugs kann die Möglichkeit haben, Nebentätigkeiten wie beispielsweise Schreiben von E-Mails, Nutzen von sozialen Netzwerken oder dem Internet zu erledigen. Während eines vollautomatisierten Fahrens des Kraftfahrzeugs übernimmt beispielsweise ein Staupilot als automatisierte Fahrfunktion das Steuern des Kraftfahrzeugs könnte sich sogar ein Fahrer einer solchen Tätigkeit widmen. Obwohl der Benutzer beispielsweise während einer solchen automatisierten Funktion nicht selbst auf das Fahrgeschehen achten muss, kann es angebracht sein, dass er etwaige weitere Sicherheitsregeln beachtet. Dazu kann beispielsweise das Freilassen von vorbestimmten Sicherheitsbereichen gehören, beispielsweise einem Bereich zwischen einem Lenkrad oder einen Airbag und dem Benutzer, sodass beispielsweise bei einem Auslösen des Airbags sichergestellt ist, dass sich in dem Sicherheitsbereich keine Gegenstände befinden, die durch den Airbag unkontrolliert bewegt werden könnten. Zum Vermeiden der beispielhaften Airbag-Auslösung wird bisher vorgeschlagen, dass der Insasse kein eigenes mobiles Endgerät benutzt. Ein Benutzer ist bisher darauf angewiesen, dass sein Kraftfahrzeug über eine kraftfahrzeugeigene Bedien- und EingabeEinheit, also zum Beispiel eine Tastatur und/oder ein Touchpad, verfügt.

Aus der US 2005 184860 A1 sind ein Verfahren und eine Vorrichtung zur Steuerung eines tragbaren Informationsgerätes bekannt, bei dem in Abhängigkeit von einem erfassten Fahrzeugzustand eine Funktion des mobilen Endgeräts gesperrt werden kann. Dazu wird beispielsweise, sobald sich das Kraftfahrzeug bewegt, die Funktion gesperrt.
Die DE 100 07 014 A1 beschreibt ein Verfahren und eine Vorrichtung zur Sitzbelegungserkennung, wobei eine Position einer Person in Bezug auf einen Gasprallsack in einem Fahrzeug erfasst wird.
Ein Verfahren zum Steuern eines Betriebszustandes eines mobilen Endgeräts ist aus der DE 10 2012 014 074 A1 bekannt. Um eine Ablenkung des Fahrers vom Verkehrsgeschehen zu vermeiden, kann hierbei das Visualisieren von Inhalten, die durch das mobile Endgerät angezeigt werden, unterbunden werden.

Das Dokument US2011105097 beschreibt ein Verfahren zum Kontrollieren von Funktionen eines mobilen Endgerätes. Hierzu können Funktionalitäten eingeschränkt oder abschaltet werden, während sich ein Benutzer des Fahrzeugs in dem Fahrzeug befindet. Eine der Erfindung zugrundeliegende Aufgabe ist das verbesserte Kontrollieren von Gegenständen eines Benutzers des Kraftfahrzeugs.
Die Aufgabe wird von dem erfindungsgemäßen Verfahren, der erfindungsgemäßen Steuereinrichtung und dem erfindungsgemäßen Kraftwagen gemäß den unabhängigen Patentansprüchen gelöst. Vorteilhafte Weiterbildungen der Erfindung sind durch die Unteransprüche gegeben.
Das erfindungsgemäße Verfahren beruht auf der Idee, eine Position des mobilen Endgeräts in dem Innenraum des Kraftfahrzeugs zu erfassen. In Abhängigkeit von der erfassten Position kann ein Betriebszustand des mobilen Endgeräts gesteuert oder der Benutzer gewarnt werden. Der Benutzer kann so während einer Fahrt ein eigenes mobiles Endgerät benutzen, ohne dass dieses mit einer besonderen, für das Kraftfahrzeug kompatiblen Elektronik ausgestattet werden muss. Das erfindungsgemäße Verfahren übernimmt dabei eine Kontrolle über den Sicherheitsbereich.

Das erfindungsgemäße Verfahren dient dementsprechend zum Sichern eines Innenraums eines Kraftfahrzeugs, wobei zunächst eine Position des mobilen Endgeräts, beispielsweise eines Tablet-PCs oder eines Mobiltelefons, durch eine Sensoreinrichtung erfasst wird. Eine Sensoreinrichtung ist dabei eine Einrichtung, die einen Messgrößenaufnehmer, also einen Sensor, oder mehrere Sensoren umfasst. Anhand der erfassten Position ermittelt eine Steuereinrichtung des Kraftfahrzeugs, beispielsweise ein Steuergerät oder ein Mikrocontroller, ob das mobile Endgerät eine Position innerhalb eines freizuhaltenden, vorbestimmten Sicherheitsbereichs zwischen einem vorbestimmten Innenraumausstattungsbauteil des Kraftfahrzeugs und einem Benutzer des Kraftfahrzeugs einnimmt. Die Steuereinrichtung ist dabei zur elektronischen Datenverarbeitung, zum Erzeugen eines Steuersignals und zum Steuern einer weiteren elektronischen Komponente ausgelegt. Die Steuereinrichtung umfasst beispielsweise Steuergerät oder einen Mikrocontroller, also eine Halbleiterchip, der einen Prozessor und zugleich auch Peripheriefunktionen enthält.

Das vorbestimmte Innenraumausstattungsbauteil des Kraftfahrzeugs umfasst dabei vorzugsweise ein Lenkrad und/oder eine Pedalerie und/oder ein Sicherheitssystem des Kraftfahrzeugs, insbesondere einen Airbag. Die Bereiche zwischen einem solchen Innenraumausstattungsbauteil und dem Benutzer stellen besonders sensible Bereiche dar, deren Überwachung durch das erfindungsgemäße Verfahren zur Sicherheit des Benutzers während der Fahrt beiträgt.

Bei einem Einnehmen einer Position des mobilen Endgeräts innerhalb des freizuhaltenden, vorbestimmten Sicherheitsbereichs, vorzugsweise einem Vorliegen einer Position des mobilen Endgeräts innerhalb des freizuhaltenden, vorbestimmten Sicherheitsbereichs, erfolgt durch eine Sicherheitskontrolleinrichtung ein Herbeiführen eines Unterbindens einer Nutzung des mobilen Endgeräts innerhalb des Sicherheitsbereichs. Mit anderen Worten unterbindet die Sicherheitskontrolleinrichtung ein Nutzen des mobilen Endgeräts innerhalb des Sicherheitsbereichs und/oder wenn sich das mobile Endgerät in den Sicherheitsbereich hineinbewegt und/oder wenn sich das mobile Endgerät zu dem Sicherheitsbereich hinbewegt, falls die Steuereinrichtung ermittelt, dass das mobile Endgerät eine Position innerhalb eines freizuhaltenden, vorbestimmten Sicherheitsbereichs zwischen einem vorbestimmten Innenraumausstattungsbauteil des Kraftfahrzeugs und einem Benutzer des Kraftfahrzeugs einnimmt.

Das erfindungsgemäße Verfahren trägt wesentlich dazu bei, dass ein wichtiger Sicherheitsbereich im Kraftfahrzeug frei von unkontrollierbaren Gegenständen bleibt. Dadurch muss der Benutzer, also der Insasse des Kraftfahrzeug, nicht ständig selbst aufpassen, dass er das mobile Endgerät außerhalb eines geeigneten Nutzungsbereichs hält, das heißt das Kraftfahrzeug überwacht so ein Nutzen des mobilen Endgeräts..

Das Ermitteln, ob das mobile Endgerät eine Position innerhalb des freizuhaltenden vorbestimmten Sicherheitsbereichs einnimmt, kann gemäß einer bevorzugten Ausführungsform des erfindungsgemäßen Verfahrens dahingehend erfolgen, dass ermittelt wird, ob sich das mobile Endgerät innerhalb des Sicherheitsbereichs befindet und/oder in den vorbestimmten Sicherheitsbereich hineinbewegt. Das Ermitteln, ob sich das mobile Endgerät in den vorbestimmten Sicherheitsbereich hineinbewegt, und/oder zu dem Sicherheitsbereich hinbewegt, trägt vorteilhafterweise dazu bei, dass bereits eine Nutzungsabsicht des Benutzers außerhalb des Sicherheitsbereichs erkannt werden kann, bevor sich das mobile Endgerät tatsächlich in dem Sicherheitsbereich befindet. Hierbei kann die Sensoreinrichtung beispielsweise einen Bewegungssensor und/oder eine Kamera des Kraftfahrzeugs verwenden.

Umfasst die Sensoreinrichtung gemäß einer weiteren Ausführungsform des erfindungsgemäßen Verfahrens eine Sensoreinrichtung des Kraftfahrzeugs, vorzugsweise einen Bewegungssensor des Kraftfahrzeugs und/oder eine Lichtschranke des Kraftfahrzeugs und/oder eine Kamera des Kraftfahrzeugs, können bereits im Kraftfahrzeug vorhandene Bauteile, also bereits vorhandene Sensoren, genutzt werden, ohne dass das Kraftfahrzeug nachgerüstet werden muss. Die Sensoreinrichtung kann ebenfalls eine Einrichtung zur Nahfeldkommunikation des Kraftfahrzeugs, beispielsweise einen Nahfeldkommunikations-fähigen Sendeempfänger ("Transceiver") des Kraftfahrzeugs, umfassen. Weiterhin kann das erfindungsgemäße Verfahren durchgeführt werden, ohne dass die Steuereinrichtung auf ein Betriebssystem des mobilen Endgeräts abgestimmt werden muss. Der Benutzer kann deswegen auch eigene mobile Endgeräte benutzen und ist nicht auf die vom Kraftfahrzeughersteller mitgelieferten mobilen Endgeräte angewiesen. Das Erfassen der Position des mobilen Endgeräts kann dabei alternativ oder zusätzlich durch Erfassen einer Lageänderung des mobilen Endgeräts erfolgen.

Das Erfassen der Position des mobilen Endgeräts und/oder einer Lageänderung des mobilen Endgeräts kann zusätzlich oder alternativ durch eine Sensoreinrichtung des mobilen Endgeräts erfolgen, vorzugsweise durch einen Neigungssensor des mobilen Endgeräts oder eine Einrichtung zur Nahfeldkommunikation des mobilen Endgeräts, beispielsweise eines Nahfeldkommunikations-fähigen Sendeempfängers ("Transceiver") des mobilen Endgeräts. Diese weitere Ausführungsform des erfindungsgemäßen Verfahrens ermöglicht, dass Sensoren des mobilen Endgeräts genutzt werden können, und ein Kraftfahrzeug, das keine der oben genannten Sensoren umfasst, nicht nachgerüstet werden muss.

Das Herbeiführen des Unterbindens der Nutzung des mobilen Endgeräts innerhalb des Sicherheitsbereichs kann gemäß einer weiteren Ausführungsform des erfindungsgemäßen Verfahrens durch Ändern des Betriebszustandes des mobilen Endgeräts erfolgen, beispielsweise durch Ausschalten des mobilen Endgeräts oder durch Einstellen eines Ruhemodus. Dadurch hat die Steuereinrichtung des Kraftfahrzeugs einen direkten Einfluss auf das mobile Endgerät. In einer vorteilhaften Weiterbildung kann dabei ein Aktivierungszustand des mobilen Geräts erfasst werden, und, falls das mobile Endgerät innerhalb des Sicherheitsbereichs aktiviert ist, kann eine Deaktivieren des mobilen Endgeräts erfolgen. Dadurch merkt der Fahrer sofort, wenn er das mobile Endgerät in den Sicherheitsbereich hineinbewegt hat und kann erst dann das mobile Endgerät weiter nutzen, wenn das mobile Endgerät wieder in einer sicheren Position verweilt.

Alternativ oder zusätzlich kann das Unterbinden der Nutzung des mobilen Endgeräts innerhalb des Sicherheitsbereichs herbeigeführt werden, indem eine Sicherheitskontrolleinrichtung, die eine Rückhalteeinrichtung, beispielsweise ein Kabel, vorzugsweise eine Schnur oder eine Kordel und/oder ein elastisches Band, umfasst, das mobile Endgerät zurückhält, sobald dieses in dem Sicherheitsbereich eine Position einnimmt. Die Rückhalteeinrichtung hält dann das mobile Endgerät in dem Bereich außerhalb des Sicherheitsbereichs zurück. Hierdurch kann das mobile Endgerät erst gar nicht in den Sicherheitsbereich hinein bewegt werden.

Alternativ oder zusätzlich kann gemäß einer weiteren Ausführungsform des erfindungsgemäßen Verfahrens ein Rückführen des mobilen Endgeräts in den Bereich außerhalb des Sicherheitsbereichs durch die Rückhalteeinrichtung als Sicherheitskontrolleinrichtung erfolgen. Das Unterbinden der Nutzung innerhalb des Sicherheitsbereichs wird dadurch beispielsweise durch ein Zurückziehen des mobilen Endgerät's bewirkt. Die Rückhalteeinrichtung kann dabei beispielsweise eine elastische Schnur oder ein Kabel umfassen, das an einem Innenausstattungsbauteil des Kraftfahrzeugs, beispielsweise der Mittelkonsole oder einem Kraftfahrzeugsitz, angebracht ist und an einem weiteren Ende an dem mobilen Endgerät angebracht ist. Hierdurch erfolgt ein sofortiges Unterbinden der Nutzung, so dass der Sicherheitsbereich sofort wieder frei wird.

Gemäß einer weiteren Ausführungsform der erfindungsgemäßen Verfahrens kann das Herbeiführen des Unterbindens der Nutzung des mobilen Endgeräts innerhalb des Sicherheitsbereichs durch Erzeugen eines Steuersignals erfolgen, wobei das Steuersignal eine Warnmeldung beschreibt, und die Warnmeldung durch eine Ausgabeeinrichtung des mobilen Endgeräts oder des Kraftfahrzeugs ausgegeben wird. Das Steuersignal kann dabei von der Sicherheitskontrolleinrichtung erzeugt werden. Dies ermöglicht eine sofortige Warnung des Fahrers, der dann selber entscheiden kann, ob er das mobile Endgerät wieder zurück in seine Ausgangsposition bewegt oder ob er beispielsweise das mobile Endgerät an einem anderen Ort ablegt oder verstaut.

Die oben gestellte Aufgabe wird ebenfalls gelöst durch eine Steuereinrichtung, beispielsweise ein Steuergerät des Kraftfahrzeugs oder einen Mikrocontroller des Kraftfahrzeugs, die dazu ausgelegt ist, die eine Steuereinrichtung betreffenden Verfahrensschritte einer der oben beschriebenen Ausführungsformen des erfindungsgemäßen Verfahrens durchzuführen. Hierdurch ergeben sich die oben genannten Vorteile.

Die oben gestellte Aufgabe wird ebenfalls gelöst durch einen Kraftwagen, vorzugsweise einen Personenkraftwagen, der eine der oben beschriebenen Steuereinrichtungen umfasst. Auch hier ergeben sich die bereits oben genannten Vorteile.

In einer vorteilhaften Ausführungsform des erfindungsgemäßen Kraftwagens umfasst dieser eine Sensoreinrichtung, vorzugsweise einen Bewegungssensor und/oder eine Kamera und/oder eine Lichtschranke.

Der erfindungsgemäße Kraftwagen kann weiterhin, gemäß einer weiteren besonders vorteilhaften Ausführungsform des erfindungsgemäßen Kraftwagens, eine Rückhalteeinrichtung zum Zurückhalten des mobilen Endgeräts in einem Bereich außerhalb des Sicherheitsbereichs und/oder zum Rückführen des mobilen Endgeräts in einen Bereich außerhalb des Sicherheitsbereichs umfassen. Auch hier ergeben sich die bereits oben genannten Vorteile.

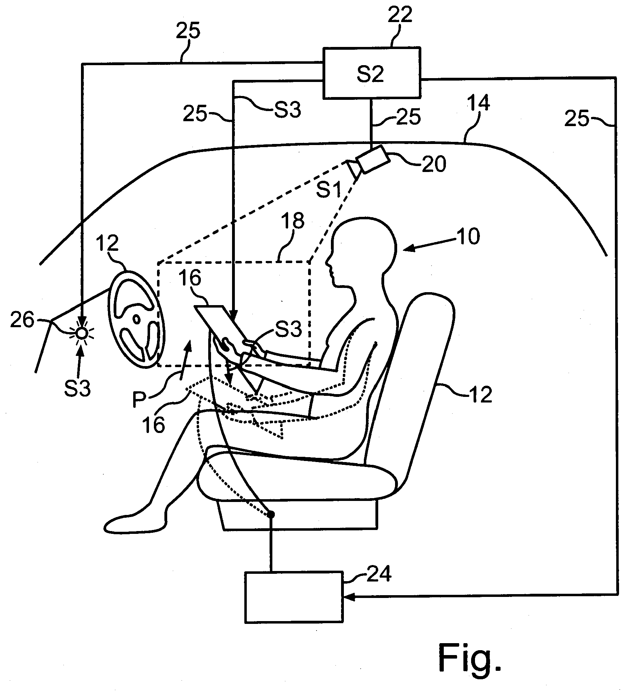

Die Erfindung wird anhand der beigefügten Zeichnungen noch einmal durch ein konkretes Ausführungsbeispiel näher erläutert. Das gezeigte Beispiel stellt ein bevorzugtes Ausführungsbeispiel der Erfindung dar. Es zeigt die einzige Figur: eine schematische Skizze zu einer Ausführungsform des erfindungsgemäßen Verfahrens.

Die einzige Fig. veranschaulicht das Prinzip eines Ausführungsbeispiels des erfindungsgemäßen Verfahrens. Dabei sitzt ein Benutzer 10 auf einem Fahrzeugsitz als Innenausstattungsbauteil 12 in einem Kraftfahrzeug 14, beispielsweise in einem Personenkraftwagen. Der Benutzer 10 fährt beispielsweise gerade mit Hilfe eines Fahrerassistenzsystems, was beispielsweise eine vollautomatisierten Betriebsmodus ausführt. Der Benutzer 10 benutzt nebenher ein mobiles Endgerät 16, beispielsweise ein mobiles Telefon, einen Tablet-PC oder ein elektronisches Buch. Im Beispiel der Figur sitzt der Benutzer 10 beispielsweise einem Lenkrad als ein weiteres Innenraumausstattungsbauteil 12 gegenüber. Das beispielhafte Lenkrad umfasst beispielsweise einen Airbag. Der Bereich 18 zwischen dem Benutzer 10 und dem Innenraumausstattungsbauteil 12 (in der Figur gestrichelt dargestellt) soll möglichst frei von Gegenständen sein, damit beispielsweise ein sich entfaltender Airbag den Gegenstand nicht unkontrolliert durch das Kraftfahrzeug 14 bewegt oder auf den Benutzer 10 schleudert. Der Bereich zwischen dem Innenraumausstattungsbauteil 12 und dem Benutzer 10 ist damit ein vorbestimmter Sicherheitsbereich 18, der freizuhalten ist. Alternativ oder zusätzlich kann der vorbestimmte Sicherheitsbereich 18 beispielsweise einen Bereich in einem Fußraum des Kraftfahrzeugs 14 umfassen, und das Innenraumausstattungsbauteil 12 kann in diesem Falle vorzugsweise ein Pedalerie des Kraftfahrzeugs 14 umfassen, also ein Pedalsystem aus einem Bremspedal, einem Gaspedal und/oder einer Ausrückgabel einer Kupplung.

Das Kraftfahrzeug 14 umfasst weiterhin eine Sensoreinrichtung 20, im Beispiel der Fig. beispielsweise eine Kamera, die an einem Dachhimmel des Kraftfahrzeugs 14 angeordnet ist. Alternativ oder zusätzlich kann die Sensoreinrichtung 20 beispielsweise eine Lichtschranke umfassen, die zum Beispiel einen Bereich zwischen den beiden Türen des Kraftfahrzeugs 14 auf einer vorbestimmten Höhe überwacht. Ein weiteres Beispiel für einen Sensor einer Sensoreinrichtung 20 kann beispielsweise ein Sendeempfangsgerät ("Transceiver") für eine Nahfeldkommunikation, ein Bewegungssensor und/oder ein Neigungssensor umfassen. Umfasst die Sensoreinrichtung 20 einen Neigungssensor, so ist dieser vorzugsweise an oder in dem mobilen Endgerät 16 angeordnet.

Alternativ oder zusätzlich kann eine beispielhafte Sensoreinrichtung 20 zum Beispiel in einem Sitz, an einem Lenkrad, in einer Tür oder in einer Mittelkonsole angebracht sein. Die Sensoreinrichtung 20 kann vorzugsweise dazu ausgelegt sein, eine Lageänderung des mobilen Endgeräts 16 zu erfassen.

In der einzigen Fig. ist eine beispielhafte Bewegung der Arme des Benutzers 10 und damit ein Bewegen des mobilen Endgeräts 16 in die Bewegungsrichtung P dargestellt, so dass die Hände des Benutzers 10 und das mobile Endgerät 16 von einer Ausgangssituation, in der Fig. als gestrichelte Lage des mobilen Endgeräts 16 und der Arme des Benutzers 10 dargestellt sein, in eine beispielhafte aktuelle Lage des mobilen Endgeräts 16 und den Armen des Benutzers 10 gezeigt, wobei sich in der aktuellen Haltung das mobile Endgerät 16 beispielsweise innerhalb des vorbestimmten Sicherheitsbereichs 18 befindet. Die Sensoreinrichtung 20 erfasst eine Position des mobilen Endgeräts 16 (Verfahrensschritt S1). Im vorliegenden Beispiel umfasst die Sensoreinrichtung 20 beispielsweise eine 3D-Kamera, die dazu ausgelegt ist, eine Lage des mobilen Endgeräts 16 und/oder eine Bewegung des mobilen Endgeräts 16 und/oder des Benutzers 10 zu erfassen. Innerhalb eines Erfassungsbereichs der Sensoreinrichtung 20 kann beispielsweise mit einer Infrarotleuchte der Sensoreinrichtung 20 geleuchtet werden. Befindet sich darin ein Objekt, so wird die von der Infrarotleuchte ausgestrahlte elektromagnetische Strahlung zu einem Sensorarray zurückgeworfen. Mittels eines solchen beispielhaften Sensorarrays können dann 3D-Bilddaten erzeugt werden, welche 3D-Koordinaten zu einzelnen Flächenelementen des mobilen Endgeräts 16 angeben. Die 3D-Bilddaten können dann von der Sensoreinrichtung 20 ausgewertet werden. Durch die 3D-Bilddaten des Sensorarrays der Sensoreinrichtung 20 kann auch eine Sequenz von aufeinander folgenden 3D-Bildern repräsentiert sein, das heißt die Sensoreinrichtung 20 kann mit dem Infrarotsensor auch Bewegungen der Hand des Benutzers 10 und/oder des mobilen Endgeräts 16 erfassen. Durch Verfolgen einer Trajektorie, beispielsweise einer Fingerspitze oder einer Gerätekante in dieser 3D-Bildsequenz, insbesondere durch Verfolgen einer Position und einer Geschwindigkeit der Fingerspitze oder der Gerätekante, kann so eine gedeutete Bewegung aus der Trajektorie extrapoliert werden. Somit kann die Sensoreinrichtung 20 beispielsweise bereits ein Bewegen des mobilen Endgeräts 16 in Richtung des Sicherheitsbereichs 18 erfassen, obwohl das mobile Endgerät 16 sich noch außerhalb des Sicherheitsbereichs 18 befindet. Die Sensoreinrichtung 20 kann den Verfahrensschritt S1 des Erfassens der Position beispielsweise regelmäßig durchführen, wozu beispielsweise ein Takt oder ein Intervall des Erfassens vorbestimmt sein kann.

Das Kraftfahrzeug 14 kann weiterhin eine Steuereinrichtung 22 und eine Sicherheitskontrolleinrichtung 24 umfassen. Die Sensoreinrichtung 20, die Steuereinrichtung 22 und/oder die Sicherheitskontrolleinrichtung 24 können dabei vorzugsweise über eine drahtlose oder drahtgebundene Kommunikationsverbindung 25, wie sie dem Fachmann aus dem Stand der Technik bekannt ist, miteinander verbunden sein. Anhand der erfassten Position ermittelt die Steuereinrichtung 22, beispielsweise ein Steuergerät des Kraftfahrzeugs 14 oder ein Mikrocontroller der Sensoreinrichtung 20, ob das mobile Endgerät 16 eine Position innerhalb des vorbestimmten Sicherheitsbereichs 18 einnimmt, das heißt, ob sich das mobile Endgerät 16 innerhalb des Sicherheitsbereichs 18 befindet und/oder in den vorbestimmten Sicherheitsbereich 18 hineinbewegt und/oder auf den Sicherheitsbereich 18 zu bewegt (S2).

Die Steuereinrichtung 22 ist dazu ausgelegt, die Position des mobilen Endgeräts 16 zu ermitteln. Bei Vorliegen einer Position innerhalb des freizuhaltenden, vorbestimmten Sicherheitsbereichs 18, wie sie im Beispiel der Figur gegeben ist, führt die Steuereinrichtung 22 ein Unterbinden einer Nutzung des mobilen Endgeräts 16 innerhalb des Sicherheitsbereichs 18 durch eine Sicherheitskontrolleinrichtung 24 herbei. Beispielsweise kann dies ein Ändern eines Betriebszustandes des mobilen Endgeräts 16 umfassen. Die Steuereinrichtung 22 kann hierzu beispielsweise ein Steuersignal erzeugen, das über eine drahtlose oder drahtgebundene Kommunikationsverbindung 25 direkt an das mobile Endgerät 16 übertragen wird und bewirkt, dass das mobile Endgerät 16 ausgeschaltet wird. Hierbei kann dem Herbeiführen des Unterbindens beispielsweise ein Erfassen eines Aktivierungszustandes des mobilen Endgeräts 16 vorangehen, so dass das Herbeiführen des Unterbindens der Nutzung nur dann erfolgt, falls das mobile Endgerät 16 innerhalb des Sicherheitsbereichs 18 aktiviert ist. Denkbar ist beispielsweise, dass zum Deaktivieren des mobilen Endgeräts 16 ein Stromfluss durch beispielsweise ein Ladekabel des mobilen Endgeräts 16 unterbunden werden kann.

Alternativ oder zusätzlich kann die Steuereinrichtung 22 ein Steuersignal erzeugen, das an einer Ausgabeeinrichtung 26, beispielsweise eine Warnleuchte des Kraftfahrzeugs 14 oder des mobilen Endgeräts 16 übertragen wird. In diesem Beispiel kann die Sicherheitskontrolleinrichtung 24 einen Mikrochip der Steuereinrichtung 22 umfassen.

In der einzigen Fig. ist die Sicherheitskontrolleinrichtung 24 als Rückhalteeinrichtung ausgestaltet. Die Sicherheitskontrolleinrichtung 24 kann dabei beispielsweise einen Mikrochip umfassen, sowie einen Mechanismus einer Verbindung zwischen dem mobilen Endgerät 16 und einem Innenraumausstattungsbauteil 12 des Kraftfahrzeugs 14. Die Verbindung kann beispielsweise als eine Schnur und/oder eine Kordel und/oder ein Kabel und/oder ein elastisches Band und/oder eine Schale zum Befestigen des mobilen endgeräts 16 ausgestaltet sein, das beispielsweise an einem Ende mit dem mobilen Endgerät 16 und an einem anderen Ende an dem Innenraumausstattungsbauteil 12 verbunden sein kann. Vorzugsweise kann die Verbindung eine Schnur und/oder eine Kordel und/oder ein elastisches Band umfassen. Diese Verbindungen sind sehr sichere Verbindungen. Im Beispiel der Fig. ist die Verbindung (in der Figur durch eine Linie zwischen dem Fahrersitz und dem mobilen Endgerät 16 dargestellt) zwischen mobilem Endgerät 16 und dem Innenraumausstattungsbauteil 12 beispielsweise mittels einem Aufrollmechanismus und einer Feder an dem Fahrersitz angebracht. Die Steuereinrichtung 22 kann bei einer erfassten Position, durch die ein Einnehmen einer Position des mobilen Endgeräts 16 in dem Sicherheitsbereich 18 beschrieben wird, ein Steuersignal erzeugen und an die Sicherheitskontrolleinrichtung 24 übertragen, das die Sicherheitskontrolleinrichtung 24 dazu veranlasst, über den Aufrollmechanismus und der einer beispielhaften Kordel das mobile Endgerät 16 in Richtung Fahrzeugsitz und damit aus dem Sicherheitsbereich 18 hinaus zu ziehen. Die Bewegungsrichtung ist dabei in der Fig. mit dem Pfeil S3 gekennzeichnet. Die Sicherheitskontrolleinrichtung 24 bewirkt damit ein Rückführen des mobilen Endgeräts 16 in einen Bereich außerhalb des Sicherheitsbereichs 18. Die Rückhalteeinrichtung als Sicherheitskontrolleinrichtung 24 kann alternativ oder zusätzlich dazu ausgelegt sein, das mobile Endgerät 16 in dem Bereich außerhalb des Sicherheitsbereichs 18 zurückzuhalten, beispielsweise durch eine Kordel und/oder eine Schnur und/oder ein Kabel, das eine feste Länge aufweist, wobei die Länge ein Bewegen des mobilen Endgeräts 16 in den Sicherheitsbereich 18 verhindert.

Das oben genannte Ausführungsbeispiel und die genannten Alternativen beschreiben das Prinzip der Erfindung, eine Position des mobilen Endgeräts 16, beispielsweise eines Bedienteils des Kraftfahrzeugherstellers, zu erfassen und zu ermitteln, also zu detektieren. Wenn das mobile Endgerät beispielsweise eine Position unterhalb eines Innenraumausstattungsbauteils 12 bedient wird, beispielsweise unterhalb eines Lenkrades und/oder eines Airbags, so ist es beispielsweise funktionsfähig. Wenn das mobile Endgerät 16 beispielsweise in einer höheren Position bedient werden soll oder bedient wird, also in einem vorbestimmten, freizuhaltenden Sicherheitsbereich 18, beispielsweise einem Bereich zwischen einem Airbag und einem Fahrer, ist das Gerät 16 beispielsweise deaktiviert. Die Position kann dabei durch ein geeignetes Verfahren abgefragt werden, zum Beispiel im einfachsten Falle durch eine Lichtschranke als Sensor einer Sensoreinrichtung 20, und/oder durch Nahfeldkommunikation. Ein Sensor oder Sensoren der Sensoreinrichtung 20 könnten dabei im Umfeld des Fahrers platziert werden, zum Beispiel im Sitz und/oder im Lenkrad und/oder in der Tür und/oder in der Mittelkonsole.

## Patentansprüche

1. Verfahren zum Sichern eines Innenraums eines Kraftfahrzeugs (14), umfassend die Schritte:
- Erfassen einer Position eines mobilen Endgeräts (16) durch eine Sensoreinrichtung (20, S1),
- anhand der erfassten Position Ermitteln durch eine Steuereinrichtung (22) des Kraftfahrzeugs (14), ob das mobile Endgerät (16) eine Position innerhalb eines freizuhaltenden, vorbestimmten Sicherheitsbereichs (18) zwischen einem vorbestimmten Innenraumausstattungsbauteil (12) des Kraftfahrzeugs (14) und einem Benutzer (10) des Kraftfahrzeugs (14) einnimmt (S2), und
- bei Einnehmen einer Position des mobilen Endgeräts (16) innerhalb des freizuhaltenden, vorbestimmten Sicherheitsbereichs (18), oder bei Vorliegen einer Position des mobilen Endgeräts (16) innerhalb des freizuhaltenden, vorbestimmten Sicherheitsbereichs (18), Herbeiführen eines Unterbindens einer Nutzung des mobilen Endgeräts (16) innerhalb des Sicherheitsbereichs (18) durch eine Sicherheitskontrolleinrichtung (24, S3),
**dadurch gekennzeichnet, dass**
das Ermitteln, ob das mobile Endgerät (16) eine Position innerhalb des freizuhaltenden, vorbestimmten Sicherheitsbereichs (18) einnimmt (S2), dahingehend erfolgt, dass ermittelt wird, ob sich das mobile Endgerät (16) in den vorbestimmten Sicherheitsbereich (18) hineinbewegt und/oder zu dem Sicherheitsbereich (18) hinbewegt,
und wobei das Herbeiführen des Unterbindens der Nutzung des mobilen Endgeräts (16) innerhalb des Sicherheitsbereichs (18, S3) durch Rückführen des mobilen Endgeräts (16) in einen Bereich außerhalb des Sicherheitsbereichs (18) durch eine Rückhalteeinrichtung als Sicherheitskontrolleinrichtung (24) erfolgt, wobei die Rückhalteeinrichtung entweder a) als elastisches Band ausgestaltet ist, oder als Schnur und/oder Kabel und/oder Kordel mit einem Aufrollmechanismus zum Hinausziehen des mobilen Endgeräts (16) aus dem Sicherheitsbereich (18), oder b) als Kordel und/oder Schnur und/oder Kabel ausgestaltet ist mit einer festen Länge, die ein Bewegen des mobilen Endgeräts (16) in den Sicherheitsbereich (18) verhindert.

2. Verfahren nach Anspruch 1,
**dadurch gekennzeichnet, dass**
das Erfassen der Position des mobilen Endgeräts (16, S1) durch Erfassen einer Lageänderung des mobilen Endgeräts (16) erfolgt, wobei die Sensoreinrichtung (20) eine Sensoreinrichtung (20) des Kraftfahrzeugs (14) umfasst, vorzugsweise einen Bewegungssensor des Kraftfahrzeugs (14) und/oder eine Einrichtung zur Nahfeldkommunikation des Kraftfahrzeugs und/oder eine Kamera des Kraftfahrzeugs (14) und/oder eine Lichtschranke des Kraftfahrzeugs (14).

3. Verfahren nach einem der vorhergehenden Ansprüche,
**dadurch gekennzeichnet, dass**
das Erfassen der Position des mobilen Endgeräts (16, S1) durch Erfassen einer Lageänderung des mobilen Endgeräts (16) erfolgt, und/oder wobei die Sensoreinrichtung (20) eine Sensoreinrichtung (20) des mobilen Endgeräts (16) umfasst, vorzugsweise einen Neigungssensor des mobilen Endgeräts (16) oder eine Einrichtung zur Nahfeldkommunikation.

4. Verfahren nach einem der vorhergehenden Ansprüche,
**dadurch gekennzeichnet, dass**
das vorbestimmte Innenraumausstattungsbauteil (12) des Kraftfahrzeugs (14) ein Lenkrad und/oder ein Pedalerie und/oder ein Sicherheitssystem des Kraftfahrzeugs (14), insbesondere einen Airbag, umfasst.

5. Verfahren nach einem der vorhergehenden Ansprüche,
**dadurch gekennzeichnet, dass**
das Herbeiführen des Unterbindens der Nutzung des mobilen Endgeräts (16) innerhalb des Sicherheitsbereichs (18, S3) durch Ändern des Betriebszustandes des mobilen Endgeräts (16) erfolgt.

6. Verfahren nach Anspruch 5,
**gekennzeichnet durch**:
- Erfassen eines Aktivierungszustandes des mobilen Endgeräts (16, S4), und, falls das mobile Endgerät (16) innerhalb des Sicherheitsbereichs (18) aktiviert ist, Deaktivieren des mobilen Endgeräts (16) und dadurch Herbeiführen des Unterbindens der Nutzung.

7. Verfahren nach einem der vorhergehenden Ansprüche,
**dadurch gekennzeichnet, dass**
das Herbeiführen des Unterbindens der Nutzung des mobilen Endgeräts (16) innerhalb des Sicherheitsbereichs (18, S3) durch Zurückhalten des mobilen Endgeräts (16) in einen Bereich außerhalb des Sicherheitsbereichs (18) durch eine Rückhalteeinrichtung als Sicherheitskontrolleinrichtung (24) erfolgt, insbesondere durch eine Schnur und/oder eine Kordel und/oder ein elastisches Band.

8. Verfahren nach einem der vorhergehenden Ansprüche,
**dadurch gekennzeichnet, dass**
das Herbeiführen des Unterbindens der Nutzung des mobilen Endgeräts (16) innerhalb des Sicherheitsbereichs (18, S3) durch Erzeugen eines Steuersignals, das eine Warnmeldung beschreibt, und Ausgeben der Warnmeldung durch eine Ausgabeeinrichtung (26).

9. Steuereinrichtung (22), die dazu ausgelegt ist, die eine Steuereinrichtung (22) betreffenden Verfahrensschritte eines Verfahrens gemäß einem der Ansprüche 1 bis 8 durchzuführen.

10. Kraftwagen (14), umfassend eine Steuereinrichtung (22) gemäß Anspruch 9.

11. Kraftwagen (14) gemäß Anspruch 10, umfassend eine Sensoreinrichtung (20), vorzugsweise einen Bewegungssensor und/oder eine Kamera und/oder eine Lichtschranke.

12. Kraftwagen (14) gemäß einem der Ansprüche 10 oder 11, weiterhin umfassend eine Rückhalteeinrichtung zum Zurückhalten des mobilen Endgeräts (16) in dem Bereich außerhalb des Sicherheitsbereichs (18) und/oder zum Rückführen des mobilen Endgeräts (16) in einen Bereich außerhalb des Sicherheitsbereichs (18), wobei die Rückhalteeinrichtung entweder a) als elastisches Band ausgestaltet ist, oder als Schnur und/oder Kabel und/oder Kordel mit einem Aufrollmechanismus zum Hinausziehen des mobilen Endgeräts (16) aus dem Sicherheitsbereich (18), oder b) als Kordel und/oder Schnur und/oder Kabel ausgestaltet ist mit einer festen Länge, die ein Bewegen des mobilen Endgeräts (16) in den Sicherheitsbereich (18) verhindert.

## Claims

1. Method for securing an interior of a motor vehicle (14), comprising the following steps:
- detecting a position of a mobile terminal (16) by a sensor device (20. S1),
- on the basis of the detected position, determining by means of a control device (22) of the motor vehicle (14) whether the mobile terminal (16) adopts a position within a predetermined security region (18) to be kept clear, between a predetermined interior trim component (12) of the motor vehicle (14) and a user (10) of the motor vehicle (14) (S2), and
- if the mobile terminal (16) adopts a position within the predetermined security region (18) to be kept clear, or if a position of the mobile terminal (16) is within the predetermined security region (18) to be kept clear, implementing a prevention of use of the mobile terminal (16) within the security region (18) by means of a security control device (24, S3),
**characterised in that**
the determination whether the mobile terminal (16) adopts (S2) a position within the predetermined security region (18) to be kept clear is carried out **in that** it is determined whether the mobile terminal (16) moves into the predetermined security region (18) and/or moves towards the security region (18), and wherein the implementation of the prevention of the use of the mobile terminal (16) within the security region (18, S3) is carried out by removing the mobile terminal (16) to a region outside the security region (18) by means of a retention device as a security control device (24), wherein the retention device is formed either a) as an elastic band, or as a string and/or cable and/or cord with a winding mechanism for withdrawing the mobile terminal (16) from the security region (18), or b) is formed as a cord and/or string and/or cable having a fixed length, which prevents a movement of the mobile terminal (16) in the security region (18).

2. Method according to claim 1,
**characterised in that**
the detection of the position of the mobile terminal (16, S1) is carried out by detecting a change in position of the mobile terminal (16), wherein the sensor device (20) includes a sensor device (20) of the motor vehicle (14), preferably a movement sensor of the motor vehicle (14) and/or a device for the near-field communication of the motor vehicle and/or a camera of the motor vehicle (14) and/or a light barrier of the motor vehicle (14).

3. Method according to any one of the preceding claims,
**characterised in that**
the detection of the position of the mobile terminal (16, S1) is carried out by detecting a change in position of the mobile terminal (16), and/or wherein the sensor device (20) includes a sensor device (20) of the mobile terminal (16), preferably a tilt sensor of the mobile terminal (16) or a device for the near-field communication.

4. Method according to any one of the preceding claims,
**characterised in that**
the predetermined interior trim component (12) of the motor vehicle (14) includes a steering wheel and/or pedals and/or a safety system of the motor vehicle (14), in particular an airbag.

5. Method according to any one of the preceding claims,
**characterised in that**
the implementation of the prevention of use of the mobile terminal (16) within the security region (18, S3) is carried out by changing the operating state of the mobile terminal (16).

6. Method according to claim 5,
**characterised by**:
- detecting an activation state of the mobile terminal (16, S4) and, if the mobile terminal (16) is activated within the security region (18), deactivating the mobile terminal (16) and thereby implementing the prevention of use.

7. Method according to any one of the preceding claims,
**characterised in that**
the implementation of the prevention of use of the mobile terminal (16) within the security region (18, S3) is carried out by detaining the mobile terminal (16) in a region outside the security region (18) by means of a retaining device as security control device (24), in particular by a cord and/or a string and/or an elastic band.

8. Method according to any one of the preceding claims,
**characterised in that**
the implementation of the prevention of use of the mobile terminal (16) within the security region (18, S3) is carried out by generating a control signal, which describes a warning notification, and outputting the warning notification by means of an output device (26).

9. Control device (22), which is designed to carry out the process steps relating to a control device (22), of a method according to any one of claims 1 to 8.

10. Motor vehicle (14), comprising a control device (22) according to claim 9.

11. Motor vehicle (14) according to claim 10, comprising a sensor device (20), preferably a movement sensor and/or a camera and/or a light barrier.

12. Motor vehicle (14) according to any one of claims 10 or 11, furthermore comprising a retaining device for detaining the mobile terminal (16) in the region outside the security region (18) and/or for returning the mobile terminal (16) to a region outside the security region (18), wherein the retaining device is formed either a) as an elastic band, or as a string and/or cable and/or cord with a winding mechanism for withdrawing the mobile terminal (16) from the safety region (18), or b) is designed as a cord and/or string and/or cable having a fixed length, which prevents a movement of the mobile terminal (16) in the security region (18).

## Revendications

1. Procédé pour sécuriser un habitacle d'un véhicule automobile (14), comprenant les étapes :
- (S1) détection d'une position d'un terminal mobile (16) par un dispositif capteur (20),
- (S2) à l'aide de la position détectée, vérification par un dispositif de commande (22) du véhicule automobile (14) si le terminal mobile (16) prend une position à l'intérieur d'une zone de sécurité (18), prédéterminée et à garder libre, entre un équipement d'habitacle (12) prédéterminé du véhicule automobile (14) et un utilisateur (10) du véhicule automobile (14), et
- (S3) lorsque le terminal mobile (16) vient prendre une position à l'intérieur de la zone de sécurité (18) prédéterminée et à garder libre ou en présence d'une position du terminal mobile (16) à l'intérieur de la zone de sécurité (18) prédéterminée et à garder libre, déclenchement d'un blocage d'une utilisation du terminal mobile (16) à l'intérieur de la zone de sécurité (18) par un dispositif de contrôle de sécurité (24),
**caractérisé en ce que** la vérification (S2) si le terminal mobile (16) prend une position à l'intérieur d'une zone de sécurité (18) prédéterminée et à garder libre s'effectue en vérifiant si le terminal mobile (16) pénètre dans la zone de sécurité (18) prédéterminée et/ou se déplace vers la zone de sécurité (18),
dans lequel le déclenchement (S3) du blocage de l'utilisation du terminal mobile (16) à l'intérieur de la zone de sécurité (18) s'effectue en ramenant le terminal mobile (16) dans une zone en dehors de la zone de sécurité (18) au moyen d'un dispositif de retenue servant de dispositif de contrôle de sécurité (24), le dispositif de retenue étant conçu a) soit comme un ruban élastique ou comme une attache et/ou comme un câble et/ou comme un cordon avec un mécanisme d'enroulement afin de sortir le terminal mobile (16) de la zone de sécurité (18), b) soit comme un cordon et/ou une attache et/ou un câble ayant une longueur fixe qui empêche un déplacement du terminal mobile (16) jusque dans la zone de sécurité (18).

2. Procédé selon la revendication 1, **caractérisé en ce que** la détection (S1) de la position du terminal mobile (16) s'effectue via la détection d'une modification de position du terminal mobile (16), le dispositif capteur (20) comprenant un dispositif capteur (20) du véhicule automobile (14), de préférence un capteur de mouvement du véhicule automobile (14) et/ou un dispositif destiné à la communication en champ proche du véhicule automobile et/ou une caméra du véhicule automobile (14) et/ou une barrière photoélectrique du véhicule automobile (14).

3. Procédé selon l'une quelconque des revendications précédentes, **caractérisé en ce que** la détection (S1) de la position du terminal mobile (16) s'effectue en détectant une modification de position du terminal mobile (16), et/ou dans lequel le dispositif capteur (20) comprend un dispositif capteur (20) du terminal mobile (16), de préférence un capteur d'inclinaison du terminal mobile (16) ou un dispositif destiné à la communication en champ proche.

4. Procédé selon l'une quelconque des revendications précédentes, **caractérisé en ce que** l'équipement d'habitacle (12) prédéterminé du véhicule automobile (14) comprend un volant de direction et/ou un système de pédales et/ou un système de sécurité du véhicule automobile (14), en particulier un airbag.

5. Procédé selon l'une quelconque des revendications précédentes, **caractérisé en ce que** le déclenchement (S3) du blocage de l'utilisation du terminal mobile (16) à l'intérieur de la zone de sécurité (18) s'effectue en modifiant l'état de fonctionnement du terminal mobile (16).

6. Procédé selon la revendication 5, **caractérisé par** :
- la détection (S4) d'un état d'activation du terminal mobile (16) et, si le terminal mobile (16) est activé à l'intérieur de la zone de sécurité (18), la désactivation du terminal mobile (16) et ainsi le déclenchement du blocage de l'utilisation.

7. Procédé selon l'une quelconque des revendications précédentes, **caractérisé en ce que** le déclenchement (S3) du blocage de l'utilisation du terminal mobile (16) à l'intérieur de la zone de sécurité (18) s'effectue en retenant le terminal mobile (16) dans une zone en dehors de la zone de sécurité (18) au moyen d'un dispositif de retenue servant de dispositif de contrôle de sécurité (24), en particulier au moyen d'une attache et/ou d'un cordon et/ou d'un ruban élastique.

8. Procédé selon l'une quelconque des revendications précédentes, **caractérisé en ce que** le déclenchement (S3) du blocage de l'utilisation du terminal mobile (16) à l'intérieur de la zone de sécurité (18) s'effectue en produisant un signal de commande qui décrit un message d'avertissement et en délivrant le message d'avertissement au moyen d'un dispositif de sortie (26).

9. Dispositif de commande (22) qui est conçu pour mettre en oeuvre des étapes de procédé, concernant un dispositif de commande (22), d'un procédé selon l'une quelconque des revendications 1 à 8.

10. Véhicule à moteur (14), comprenant un dispositif de commande (22) selon la revendication 9.

11. Véhicule à moteur (14) selon la revendication 10, comprenant un dispositif capteur (20), de préférence un capteur de mouvement et/ou une caméra et/ou une barrière photoélectrique.

12. Véhicule à moteur (14) selon l'une des revendications 10 ou 11, comprenant en outre un dispositif de retenue destiné à retenir le terminal mobile (16) dans la zone en dehors de la zone de sécurité (18) et/ou à ramener le terminal mobile (16) dans une zone en dehors de la zone de sécurité (18), lequel dispositif de retenue est conçu a) soit comme un ruban élastique ou comme une attache et/ou comme un câble et/ou comme un cordon avec un mécanisme d'enroulement afin de sortir le terminal mobile (16) de la zone de sécurité (18), b) soit comme un cordon et/ou une attache et/ou un câble ayant une longueur fixe qui empêche un déplacement du terminal mobile (16) jusque dans la zone de sécurité (18).
